# EUROPEAN PATENT APPLICATION

(11) **EP 4 311 616 A1**
(43) Date of publication of application: **31.01.2024**
(21) Application number: 22187609.7
(22) Date of filing: 28.07.2022
(51) Int. Cl.: B23D 45/04, B27B 5/29

(54) **POWER TOOLS WITH SENSOR ARRAYS AND METHODS OF OPERATING POWER TOOLS**

(71) Applicant: Festool GmbH, 73240 Wendlingen am Neckar (DE)
(72) Inventor: FRANK, Josua, 73660 Urbach (DE); KELLER, Moritz, 70734 Fellbach (DE)
(74) Representative: Maiwald GmbH

(57) **Abstract**

Power tools with sensor arrays and methods of operating power tools are disclosed herein. In addition to the sensor arrays (100), the power tools (10) include an implement holder (20), a motor (40), a workpiece support (50), and a controller (120). The implement holder is configured to hold an implement (30). The motor is configured to receive an electric current and to actuate the implement holder to move the implement. The workpiece support includes a support surface (52) configured to support the workpiece (90) and is configured to maintain an at least substantially fixed orientation relative to the workpiece while the implement performs an operation on the workpiece. The sensor array (100) is configured to detect physical contact between the workpiece support and the workpiece and to generate a sensor output (104). The controller is programmed to receive the sensor output and to control the operation of the power tool based, at least in part, on the sensor output.

## Description

### Field of the Disclosure

The present disclosure relates generally to power tools with sensor arrays and/or to methods of operating the power tools.

### Background of the Disclosure

Power tools may be utilized to perform an operation on a workpiece. As examples, circular saws, reciprocating saws, and/or band saws may be utilized to cut the workpiece. As additional examples, drills may be utilized to define holes in the workpiece, sanders may be utilized to smooth the workpiece, grinders may be utilized to grind the workpiece, and/or machining equipment may be utilized to machine the workpiece. The above-described power tools include an implement that moves, relative to the workpiece, to perform the operation on the workpiece, such as via removing material from the workpiece.

In some examples, power tools include a workpiece support. The workpiece support is configured to position and/or locate the workpiece relative to the power tool and/or relative to the implement. In some such examples, motion of the workpiece, relative to the workpiece support while the implement performs the operation on the workpiece, may be undesirable. As an example, such relative motion may cause damage to the workpiece. As another example, such relative motion may be indicative of, or may initiate, a kickback condition in which the power tool moves unexpectedly relative to the workpiece. For certain types, or classes, of power tools, it may be beneficial to detect, and respond to, this relative motion, such as to decrease a potential for workpiece damage and/or a kickback condition. Thus, there exists a need for improved power tools with sensor arrays and methods of operating the power tools.

### Summary of the Disclosure

Power tools with sensor arrays and methods of operating power tools are disclosed herein. In addition to the sensor arrays, the power tools include an implement holder, a motor, a workpiece support, and a controller. The implement holder is configured to hold an implement, which is configured to perform an operation on a workpiece. The motor is configured to receive an electric current and to actuate the implement holder to move the implement responsive to receipt of the electric current. The workpiece support includes a support surface configured to support the workpiece and is configured to maintain an at least substantially fixed orientation relative to the workpiece while the implement performs the operation on the workpiece. The sensor array is configured to detect physical contact between the workpiece support and the workpiece and to generate a sensor output that is based, at least in part, on the physical contact between the workpiece support and the workpiece. The controller is programmed to receive the sensor output from the sensor array and to control the operation of the power tool based, at least in part, on the sensor output.

The methods include positioning a workpiece, detecting a position of the workpiece, and controlling operation of the power tool. The positioning includes positioning the workpiece on a support surface of a workpiece support of the power tool. The detecting includes detecting, with a sensor array of the power tool, a position of the workpiece on the support surface by detecting physical contact between the workpiece and the support surface. The controlling includes controlling the operation of the power tool based, at least in part, on the detecting.

### Brief Description of the Drawings

Fig. 1 is a schematic illustration of examples of a power tool that includes a sensor array, according to the present disclosure.
Fig. 2 is an illustration of an example of a miter saw that includes a sensor array, according to the present disclosure.
Fig. 3 is an illustration of an example of another miter saw that includes a sensor array, according to the present disclosure.
Fig. 4 is a front view of a workpiece support that includes a sensor array, according to the present disclosure.
Fig. 5 is a top view of a workpiece support that includes a sensor array, according to the present disclosure.
Fig. 6 is an illustration of an example of a sliding table saw that includes a sensor array, according to the present disclosure.
Fig. 7 is an illustration of an example of a handheld joiner that includes a sensor array, according to the present disclosure.
Fig. 8 is another view of the workpiece support of the handheld joiner of Fig. 7.
Fig. 9 is a flowchart depicting examples of methods of operating power tools, according to the present disclosure.

### Detailed Description and Best Mode of the Disclosure

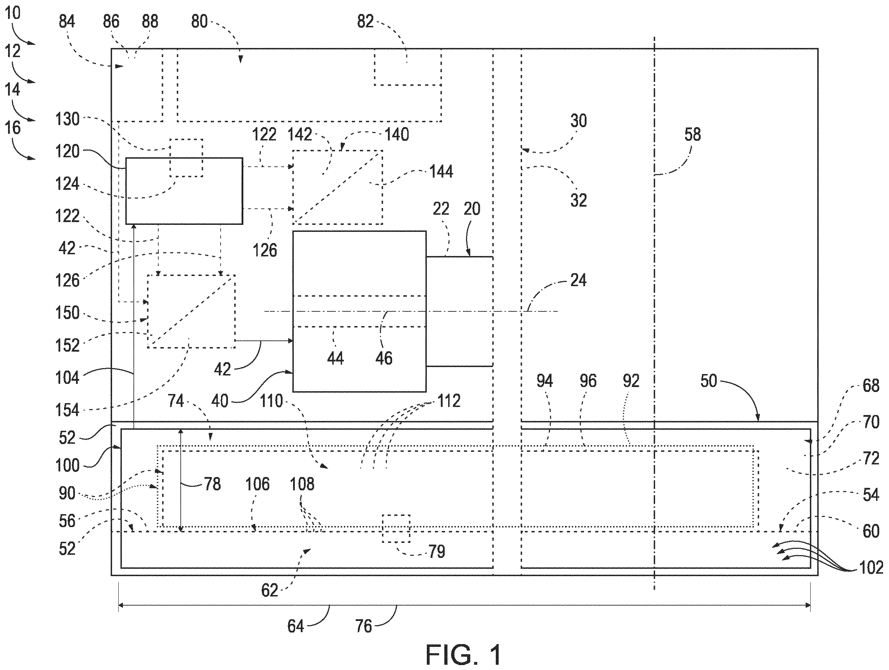

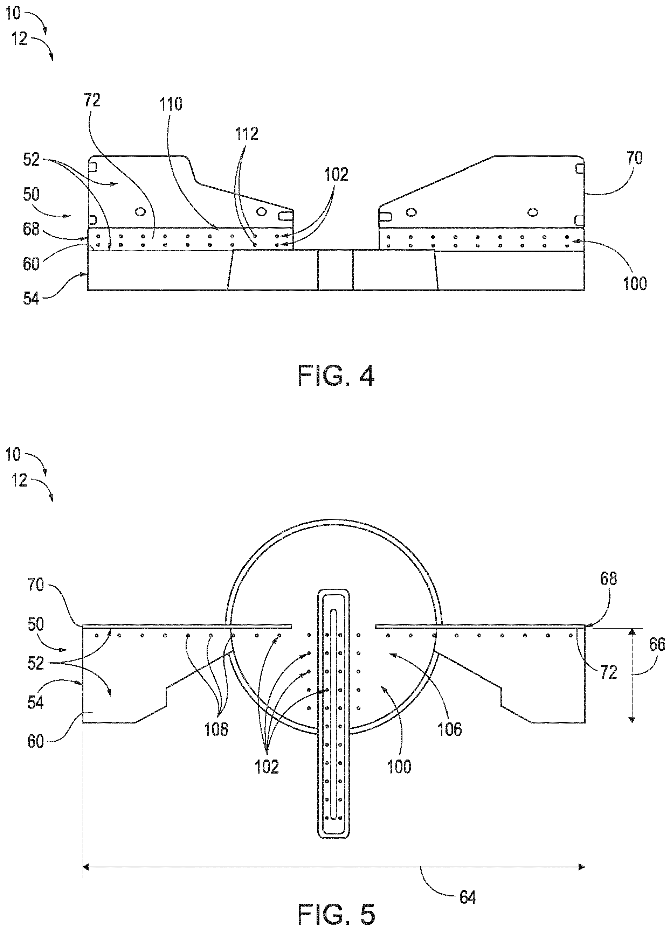

Figs. 1-9 provide examples of power tools 10 that include sensor arrays 100 and/or of methods 200, according to the present disclosure. Elements that serve a similar, or at least substantially similar, purpose are labeled with like numbers in each of Figs. 1-9, and these elements may not be discussed in detail herein with reference to each of Figs. 1-9. Similarly, all elements may not be labeled in each of Figs. 1-9, but reference numerals associated therewith may be utilized herein for consistency. Elements, components, and/or features that are discussed herein with reference to one or more of Figs. 1-9 may be included in and/or utilized with any of Figs. 1-9 without departing from the scope of the present disclosure. In general, elements that are likely to be included in a particular embodiment are illustrated in solid lines, while elements that are optional are illustrated in dashed lines. However, elements that are shown in solid lines may not be essential to all embodiments and, in some embodiments, may be omitted without departing from the scope of the present disclosure.

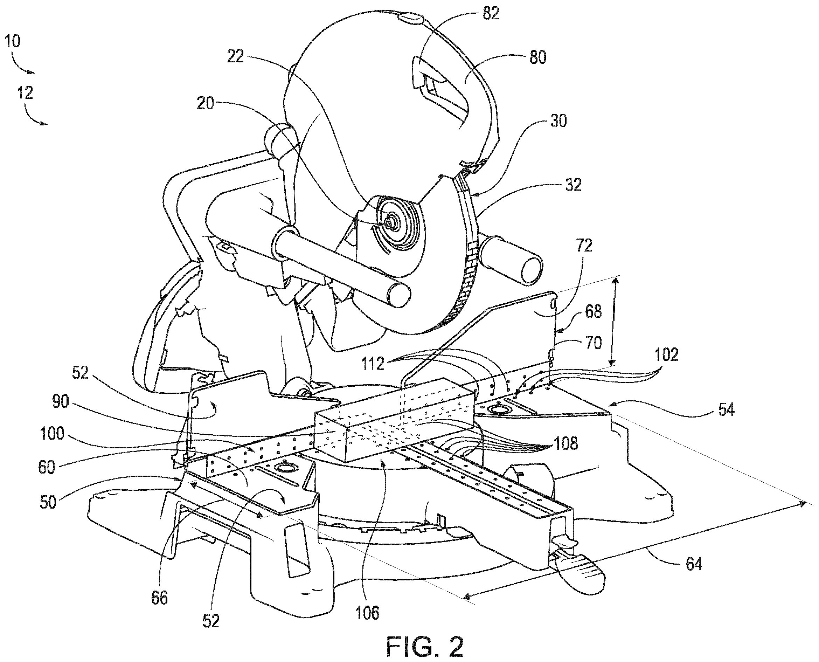

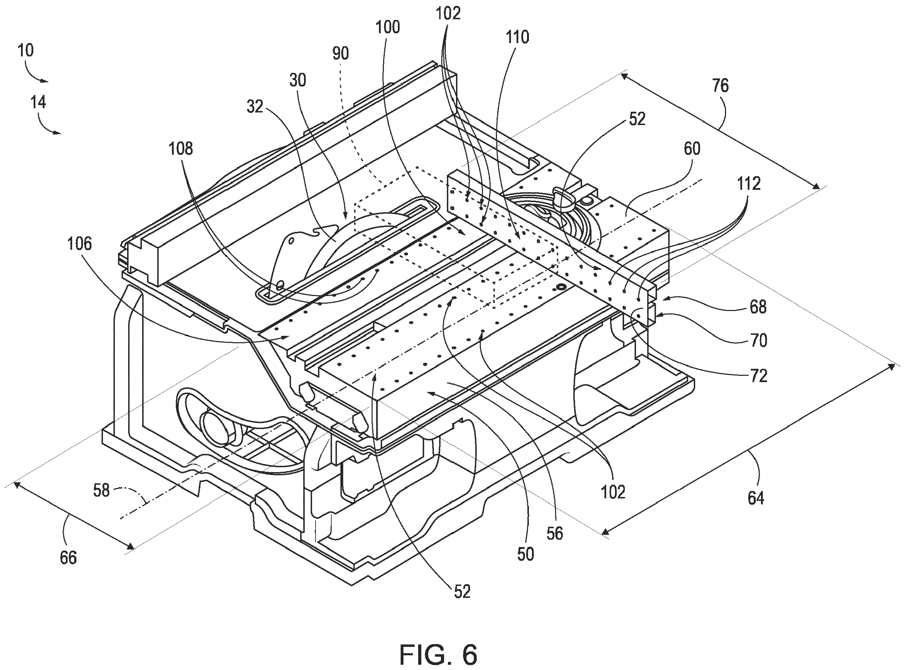

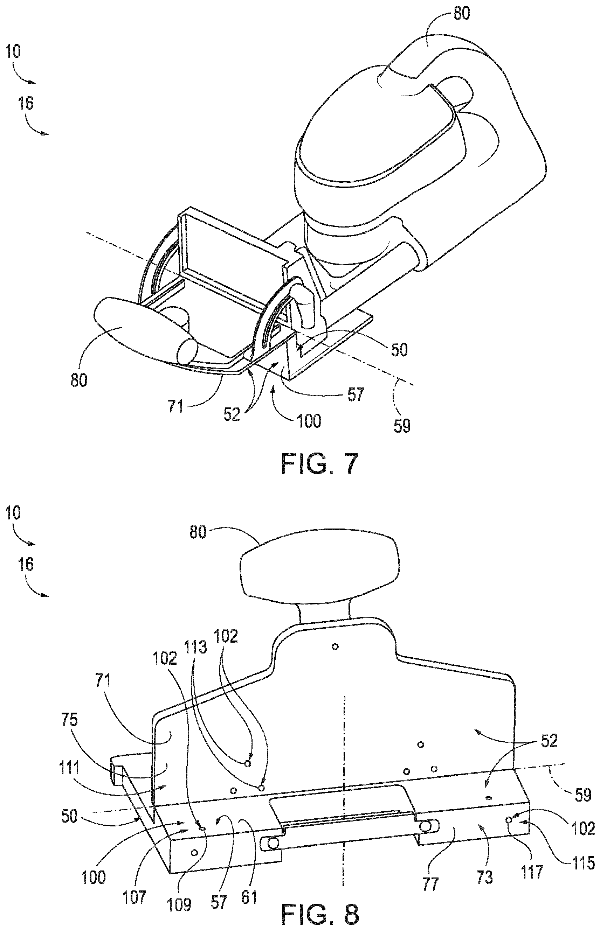

Fig. 1 is a schematic illustration of examples of a power tool 10 that includes a sensor array 100, according to the present disclosure. Figs. 2-5 are illustrations of examples of power tools 10, in the form of miter saws 12 and/or components of miter saws 12, that include sensor arrays 100, according to the present disclosure. Fig. 6 is an illustration of an example of a sliding table saw 14 that includes a sensor array 100, according to the present disclosure. Figs. 7-8 are illustrations of an example of a handheld joiner 16 that includes a sensor array 100, according to the present disclosure.

As collectively illustrated in Figs. 1-8, and with specific reference to the schematic illustration of Fig. 1, power tools 10 include an implement holder 20, a motor 40, a workpiece support 50, a controller 120, and sensor array 100. Implement holder 20 is configured to hold an implement 30, which is configured to perform an operation on a workpiece 90. Motor 40 is configured to receive an electric current 42 and to actuate implement holder 20 and/or to move implement 30 responsive to receipt of electric current 42.

Workpiece support 50 includes a support surface 52, which is configured to support workpiece 90. In power tools 10, according to the present disclosure, workpiece support 50 is configured to maintain a fixed, or at least substantially fixed, orientation relative to workpiece 90 while implement 30 performs the operation on the workpiece. Stated differently, and as discussed in more detail herein, it may be desirable to maintain the fixed, or at least substantially fixed, relative orientation between workpiece support 50 and workpiece 90 while implement 30 performs the operation on the workpiece. Maintaining the fixed relative orientation may avoid a kickback condition and/or damage to the workpiece, which may result from relative motion between workpiece support 50 and workpiece 90 while implement 30 performs the operation on the workpiece.

Sensor array 100 is configured to detect physical contact between workpiece support 50 and workpiece 90 and to generate a sensor output 104, as illustrated in Fig. 1. Sensor output 104 may be based upon and/or indicative of the physical contact between workpiece support 50 and workpiece 90. As discussed in more detail herein, it is within the scope of the present disclosure that sensor array 100 may directly detect contact between the workpiece and the workpiece support and/or may indirectly detect such contact. Stated differently, and in some examples, sensor array 100 may detect the presence of workpiece 90 within one or more specific regions and/or locations of workpiece support 50, and the presence of workpiece 90 may be indicative of contact, or direct physical contact, between the workpiece and the workpiece support.

Controller 120 is adapted, configured, designed, and/or programmed to receive sensor output 104 from sensor array 100. Controller 120 also is adapted, configured, designed, and/or programmed to control the operation of power tool 10 based, at least in part, on sensor output 104.

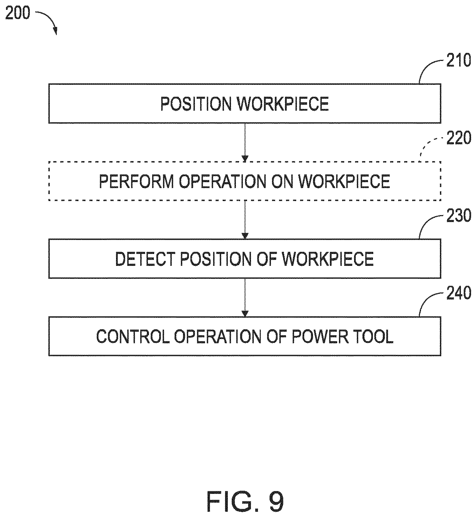

During operation of power tools 10, and as discussed in more detail herein with reference to methods 200 of Fig. 9, workpiece 90 may be positioned on support surface 52 of workpiece support 50, and the electric current may be applied and/or supplied to motor 40. This may cause motor 40 to move, to actuate, and/or to rotate implement holder 20, thereby moving, actuating, and/or rotating implement 30. Prior to and/or during motion of implement 30, sensor array 100 may be utilized to detect a position of workpiece 90 on workpiece support 50, such as via detecting which sensors 102 of sensor array 100 detect contact with the workpiece. Sensor array 100 may provide sensor output 104, which may be indicative of the position of workpiece 90 on workpiece support 50, to controller 120, and the controller may control the operation of power tool 10 based, at least in part, on the sensor output signal. This may include controlling the operation of the power tool based, at least in part, upon the position of workpiece 90 on workpiece support 50 and/or controlling the operation of the power tool based, at least in part, upon a change in the position of workpiece 90 on workpiece support 50, as discussed in more detail herein.

It is within the scope of the present disclosure that power tool 10 may include and/or be any suitable power tool that is configured to maintain the fixed, or at least substantially fixed, relative orientation between workpiece 90 and workpiece support 50 while implement 30 performs the operation on the workpiece. In addition, it also is within the scope of the present disclosure that implement 30 may include and/or be any suitable implement that may be configured to perform any suitable operation. Examples of power tool 10 include miter saws, chop saws, bevel saws, sliding table saws, sanders, grinders, drills, routers, and/or joiners. Examples of implement 30 include a blade, a saw blade, a circular saw blade, a sanding wheel, a sanding pad, a grinding wheel, a rotary cutter, a drill bit, a router bit, and/or a milling bit. Examples of the operation include a cutting operation, a sanding operation, a grinding operation, a drilling operation, a routing operation, and/or a milling operation.

In some examples, and as illustrated in Figs. 2-5, power tool 10 includes and/or is miter saw 12. When power tool 10 is or includes miter saw 12, implement holder 20 may include an arbor 22, which may be configured to rotate about an arbor rotational axis 24, as perhaps best illustrated in Fig. 1; and implement 30 may include a circular saw blade 32. In such examples, the operation may include cutting the workpiece utilizing the circular saw blade. In some such examples, workpiece support 50 includes a horizontal support 54, which may define a horizontal support surface 60, and a vertical support 68, which may define a vertical support surface 72. Also in such examples, workpiece support 50 is configured to maintain a fixed, or at least substantially fixed, orientation relative to workpiece 90 while circular saw blade 32 cuts the workpiece. Stated differently, circular saw blade 32 moves relative to workpiece support 50 to permit and/or to facilitate cutting of workpiece 90.

In some examples, and as illustrated in Fig. 6, power tool 10 includes and/or is a sliding table saw 14. In some such examples, workpiece support 50 includes a horizontal sliding table 56, which may be configured to translate relative to circular saw blade 32, such as along a corresponding linear motion axis 58, as the sliding table saw cuts the workpiece utilizing the circular saw blade. Also in some such examples, workpiece support 50 may include a vertical fence 70, which may be configured to operatively interlock with horizontal sliding table 56 and to translate, with the horizontal sliding table and/or relative to the circular saw blade, as the sliding table saw cuts the workpiece utilizing the circular saw blade. Also in such examples, workpiece support 50 is configured to maintain a fixed, or at least substantially fixed, orientation relative to workpiece 90 while circular saw blade 32 cuts the workpiece. In this specific example, the combination of workpiece 90 and workpiece support 50 moves, relative to circular saw blade 32, to permit and/or facilitate cutting of workpiece 90.

In some examples, and as illustrated in Figs. 7-8, power tool 10 may include and/or be a joiner, or a handheld joiner, 16. In such examples, implement 30 includes a joiner cutter, and the operation may include cutting, milling, and/or drilling the workpiece, such as to permit and/or facilitate joining of two different workpieces utilizing a joining structure. Also in such examples, workpiece support 50 may include a first fence region 57, a second fence region 71, which may extend away from the first fence region and/or may be configured to rotate relative to the first fence region, and/or a third fence region 73, which also may extend away from and/or perpendicular to the first fence region. Second fence region 71 may pivot and/or rotate relative to first fence region 57 about a pivot axis 59, such as to selectively vary an angle between the first support surface and the second support surface. First fence region 57 may define a first support surface 61, second fence region 71 may define a second support surface 75, and/or third fence region 73 may define a third support surface 77.

Also in such examples, workpiece support 50 is configured to maintain a fixed, or at least substantially fixed, orientation relative to workpiece 90 while implement 30 cuts, mills, and/or drills the workpiece. In this specific example, the user may hold the joiner such that workpiece support 50 contacts, and is in a fixed orientation relative to, the workpiece while the implement moves into, and out of, the workpiece.

In all examples, and as discussed, workpiece support 50 is configured to maintain the fixed, or at least substantially fixed, orientation relative to workpiece 90 while implement 30 performs the operation on the workpiece. With this in mind, and at any given point in time, sensor array 100 may detect contact between specific sensors 102 and workpiece 90. In some examples, and as discussed in more detail herein, power tools 10 may be configured to determine whether or not workpiece 90 is in contact with a sufficient number of sensors 102 and/or is in contact with sensors 102 that are sufficiently spaced-apart across the surface of workpiece support 50 and may utilize this information to control the operation of the power tool.

In some examples, power tools 10 may be configured to determine whether or not workpiece 90 is in contact with specific and/or predetermined sensors 102 and may utilize this information to control the operation of the power tool. As an example, and with reference to Fig. 1, power tools 10 may require that at least one sensor in a pair of sensors closest to and/or on opposed sides of implement 30 detects contact with the workpiece prior to permitting and/or to maintain motion of the implement relative to the workpiece.

In some examples, as discussed in more detail herein, and upon motion of workpiece 90 relative to workpiece support 50, fewer and/or different sensors 102 may detect contact with workpiece 90. Power tools 10 may determine, from this change, that workpiece 90 has moved, translated, and/or rotated relative to workpiece support 50 and may utilize this information to control the operation of the power tool.

Controller 120 may include any suitable structure that may be adapted, configured, designed, fabricated, constructed, and/or programmed to control the operation of at least one other component of power tool 10 based, at least in part, upon sensor output 104 of sensor array 100. Examples of controller 120 include an electronic controller, a dedicated controller, a special-purpose controller, a display device, a logic device, a memory device, and/or a memory device having computer-readable storage media. The computer-readable storage media, when present, also may be referred to herein as non-transitory computer-readable storage media. This non-transitory computer-readable storage media may include, define, house, and/or store computer-executable instructions, programs, and/or code; and these computer-executable instructions may direct power tools 10 and/or controllers 120 thereof to perform any suitable portion, or subset, of methods 200. Examples of such non-transitory computer-readable storage media include CD-ROMs, disks, hard drives, flash memory, etc. As used herein, storage, or memory, devices and/or media having computer-executable instructions, as well as computer-implemented methods and other methods according to the present disclosure, are considered to be within the scope of subject matter deemed patentable in accordance with Section 101 of Title 35 of the United States Code.

In some examples, and as illustrated in Fig. 1, controller 120 may include an orientation memory location 124. Orientation memory location 124, when present, may be adapted, configured, and/or programmed to store an initial sensor output 104, which may be indicative of an initial sensed location of workpiece 90 relative to workpiece support 50. An example of the initial sensed orientation is illustrated in dashed lines in Fig. 1 and indicated at 96.

In some such examples, controller 120 may be programmed to store initial sensor output 104 upon, or responsive to, supply of the electric current to motor 40. Additionally or alternatively, and in some such examples, power tool 10 and/or controller 120 thereof also may include a memory location actuator 130. Memory location actuator 130, when present, may be adapted, configured, designed, and/or constructed to be actuated, or selectively actuated, such as by a user of power tool 10. In such examples, controller 120 may be programmed to store the initial sensor output 104 responsive to actuation of memory location actuator 130. Stated differently, the presence of memory location actuator 130 may permit the user of the power tool to inform controller 120, such as via actuation of the memory location actuator, that a present value of sensor output 104 corresponds to the initial sensed location of workpiece 90, and controller 120 may be programmed to store initial sensor output 104, such as in orientation memory location 124, responsive to actuation of the memory location actuator.

The initial sensor output 104 later may be compared to a later detected sensor output 104 from sensor array 100. Stated differently, controller 120 may be programmed to control the operation of power tool 10 based, at least in part, on a comparison between the later detected sensor output 104 and the initial sensor output 104, as discussed in more detail herein. This may include controlling the operation of power tool 10 by performing any suitable step and/or steps of methods 200, which also are discussed in more detail herein.

In some examples, controller 120 may be programmed to determine a sensed orientation 92 of workpiece 90 relative to workpiece support 50. Sensed orientation 92 also may be referred to herein as and/or may be a sensed position 92 of workpiece 90 on workpiece support 50 and/or a sensed location of the workpiece on the workpiece support.

This determination may be based, at least in part, on sensor output 104. It is within the scope of the present disclosure that sensed orientation 92 may include and/or be any suitable information that is indicative of the orientation of workpiece 90 relative to workpiece support 50. As an example, and as discussed in more detail herein, sensor array 100 may include a plurality of individual, distinct, and/or spaced-apart sensors 102. In some such examples, sensed orientation 92, or sensor output 104, may be indicative of which sensors 102 of the plurality of sensors 102 are in contact, or physical contact, with workpiece 90. Stated differently, a granularity and/or a resolution of detection of sensed orientation 92, via sensor array 100, may be based upon a relative orientation and/or spacing among sensors 102 that are included in the sensor array. Stated still differently, sensed orientation 92 need not include specific information regarding an overall size and/or shape of workpiece 90 and/or how workpiece 90 is arranged on workpiece support 50. Instead, sensed orientation 92 simply may be indicative of which sensors 102 are in physical contact with workpiece 90 and/or generally indicative of the orientation of workpiece 90 with respect to workpiece support 50.

When controller 120 is programmed to determine sensed orientation 92 of workpiece 90 relative to workpiece support 50, controller 120 also may be programmed to generate an orientation output 122, which may be based upon and/or indicative of sensed orientation 92 of workpiece 90 relative to workpiece support 50. Additionally or alternatively, controller 120 may be programmed to compare sensed orientation 92 of workpiece 90 relative to workpiece support 50 to a target orientation 94 of the workpiece relative to the workpiece support. In some such examples, controller 120 also may be programmed to generate the orientation output based, at least in part, on the comparison between sensed orientation 92 of the workpiece and the target orientation of the workpiece.

An example of target orientation 94 includes orientations of workpiece 90, relative to workpiece support 50, in which there is contact, or direct physical contact, between workpiece 90 and at least a threshold horizontal region 62 of workpiece support 50, as discussed in more detail herein. Another example of target orientation 94 includes orientations of workpiece 90, relative to workpiece support 50, in which there is face-to-face contact between workpiece 90 and at least threshold horizontal region 62. Yet another example of target orientation 94 includes orientations of workpiece 90, relative to workpiece support 50, in which there is at least a threshold horizontal force magnitude applied, by workpiece 90, to threshold horizontal region 62.

Another example of target orientation 94 includes orientations of workpiece 90, relative to workpiece support 50, in which there is contact, or direct physical contact, between workpiece 90 and at least a threshold vertical region 74 of workpiece support 50. Yet another example of target orientation 94 includes orientations of workpiece 90, relative to workpiece support 50, in which there is face-to-face contact between workpiece 90 and at least threshold vertical region 74. Another example of target orientation 94 includes orientations of workpiece 90, relative to workpiece support 50, in which there is at least a threshold vertical force magnitude applied, by workpiece 90, to threshold vertical region 74.

As discussed in more detail herein, workpiece support 50 may include a horizontal support 54 and/or a vertical support 68. Threshold horizontal region 62 may include and/or be any suitable region, or subset, of horizontal support 54. Examples of threshold horizontal region 62 include a threshold overall area, or a threshold fraction of the overall area, of horizontal support 54 and/or at least a threshold minimum area in contact with horizontal support 54 on each side of implement 30. Similarly, threshold vertical region 74 may include and/or be any suitable region, or subset, of vertical support 68. Examples of threshold vertical region 74 include a threshold overall area, or a threshold fraction of the overall area, of vertical support 68 and/or at least a threshold minimum area in contact with vertical support 68 on each side of implement 30.

When power tools 10 include miter saws 12, and with reference to Figs. 2-5, threshold horizontal region 62 may include at least one horizontal sensor 108 that is closest to and/or on each side of circular saw blade 32. Additionally or alternatively, threshold vertical region 74 may include at least one vertical sensor 112 that is closest to and/or on each side of circular saw blade 32. Such a configuration may permit miter saws 12 to decrease a potential for kickback and/or for ejection of relatively small pieces of workpiece 90 that might be removed therefrom.

When power tools 10 include sliding table saw 14, and with reference to Fig. 6, sensors 102 may be disposed only upon a single side of circular saw blade 32. With this in mind, the threshold horizontal region may include at least one horizontal sensor 108 that extends parallel to, and is closest to, the circular saw blade, such as from the line of horizontal sensors. Similarly, the threshold vertical region may include at least one vertical sensor 112 that is closest to the circular saw blade, such as from the line of vertical sensors that extends parallel to and is closest to the circular saw blade.

In some examples, and with continued reference to Fig. 1, power tools 10 may include a notification structure 140 in the form of an orientation notification structure 142. Examples of notification structure 140 include a display, a digital display, an optical indicator, and/or an acoustic indicator. Orientation notification structure 142, when present, may be configured to receive orientation output 122 from controller 120. Orientation notification structure 142 may be configured to notify a user of the power tool when orientation output 122 indicates that sensed orientation 92 differs from target orientation 94, as illustrated in dotted lines in Fig. 1. Additionally or alternatively, orientation notification structure 142 may be configured to notify the user when orientation output 122 indicates that sensed orientation 92 is consistent with, or corresponds to, target orientation 94, as illustrated in dashed lines in Fig. 1. Such a configuration may permit power tools 10, according to the present disclosure, to notify the user when the orientation of the workpiece is such that kickback and/or damage to the workpiece are likely to occur.

In some examples, power tool 10 may include an interlock structure 150 in the form of an orientation interlock structure 152. Orientation interlock structure 152, when present, may be configured to receive orientation output 122 from controller 120. Orientation interlock structure 152 may be configured to selectively prevent flow of the electric current to motor 40 when orientation output 122 indicates that sensed orientation 92 differs from target orientation 94, as illustrated in dotted lines in Fig. 1. Additionally or alternatively, orientation interlock structure 152 may be configured to selectively permit the flow of electric current to motor 40 when orientation output 122 indicates that sensed orientation 92 is consistent with, or corresponds to, target orientation 94, as illustrated in dashed lines in Fig. 1. Such a configuration may permit power tool 10, according to the present disclosure, to respond to positions of the workpiece, which may be indicative of kickback of the power tool and/or that may be likely to cause damage to the workpiece, in a manner that mitigates, or decreases, the likelihood of kickback of the power tool and/or damage to the workpiece.

In some examples, and based, at least in part, on sensor output 104, controller 120 may be programmed to detect motion of workpiece 90 relative to workpiece support 50. This detection may be when and/or while implement 30 performs the operation on workpiece 90. As examples, controller 120 may be programmed to detect the motion in the form of translation of workpiece 90 relative to workpiece support 50 and/or rotation of workpiece 90 relative to workpiece support 50. In some such examples, controller 120 may be programmed to detect the motion of workpiece 90 via a change, or detection of a change, in sensor output 104. In some examples, controller 120 may be programmed to detect the motion of workpiece 90 via a change in the orientation of workpiece 90 relative to workpiece support 50. As an example, the change in orientation of workpiece 90 relative to workpiece support 50 may cause a change in a number and/or a location of sensors 102 within sensor array 100 that detect physical contact with the workpiece, and sensor output 104 may change to indicate this change in the number and/or location of sensors that detect the physical contact.

In some examples, controller 120 may be programmed to generate a motion output 126, which may be based, at least in part, on the motion of workpiece 90 relative to workpiece support 50. In some such examples, controller 120 may be programmed to generate motion output 126 when the motion, translation, and/or displacement of workpiece 90 has a, or at least a, threshold motion magnitude and/or is in a motion direction. Examples of the threshold motion magnitude include magnitudes of at least 0.01 millimeters (mm), at least 0.05 mm, at least 0.1 mm, at least 0.2 mm, at least 0.3 mm, at least 0.4 mm, at least 0.5 mm. Examples of the motion direction include directions that are away from, or directly away from, support surface 52, such as along a surface normal direction of support surface 52, and/or away from, or directly away from, sensor array 100 and/or at least one sensor 102 of sensor array 100.

In some examples, notification structure 140 of power tool 10 includes a motion notification structure 144, which may be configured to receive motion output 126 from controller 120. In some such examples, motion notification structure 144 may be configured to notify the user about and/or regarding motion of the workpiece relative to the workpiece support, such as when the motion is detected by sensor array 100 and/or exceeds the threshold motion magnitude. Such a configuration may permit power tools 10, according to the present disclosure, to notify the user when the motion of the workpiece is such that kickback and/or damage to the workpiece are likely to occur.

In some examples, interlock structure 150 includes a motion interlock structure 154, which may be configured to receive motion output 126 from controller 120. In some such examples, motion interlock structure 154 may be configured to selectively prevent flow of the electric current to motor 40 responsive to receipt of motion output 126 from the controller. Additionally or alternatively, motion interlock structure 154 may be configured to selectively stop motion of the implement responsive to receipt of the motion output from the controller. Such a configuration may permit power tool 10, according to the present disclosure, to respond to motion of the workpiece, which may be indicative of kickback of the power tool and/or that may be likely to cause damage to the workpiece, in a manner that mitigates, or decreases, the likelihood of kickback of the power tool and/or damage to the workpiece.

Workpiece support 50 may include any suitable structure that may define support surface 52, that may be adapted, configured, sized, shaped, and/or constructed to support workpiece 90, and/or that may be configured to maintain the fixed, or at least substantially fixed, orientation relative to the workpiece while the implement performs the operation on the workpiece. In some examples, and as discussed, workpiece support 50 may include and/or define horizontal support 54, which may define a horizontal support surface 60. Horizontal support 54 also may be referred to herein as a table and/or as a table top 54. In some such examples, sensor array 100 may include a horizontal sensor array 106, which may be operatively coupled to, and/or may be configured to detect physical contact with the workpiece, within horizontal support surface 60. In some such examples, horizontal sensor array 106 includes a plurality of horizontal sensors 108, which may be spaced apart on and/or along horizontal support surface 60. In some such examples, at least a subset of the plurality of horizontal sensors 108 may be spaced apart along a length 64 of horizontal support surface 60. In some such examples, at least a subset of the plurality of horizontal sensors 108 may be spaced apart along a width 66 of horizontal support surface 60, as perhaps best illustrated in Figs. 2-3 and 5-6. Such a configuration may permit and/or facilitate detection of physical contact between workpiece 90 and various regions of the horizontal support surface.

In some examples, and as discussed, workpiece support 50 may include and/or define vertical support 68, which may define a vertical support surface 72. Vertical support 68 also may be referred to herein as and/or may be a vertical fence 70. In some such examples, sensor array 100 may include a vertical sensor array 110, which may be operatively coupled to, and/or may be configured to detect physical contact with the workpiece, within vertical support surface 72. In some such examples, vertical sensor array 110 includes a plurality of vertical sensors 112, which may be spaced apart on and/or along vertical support surface 72. In some such examples, at least a subset of the plurality of vertical sensors 112 may be spaced apart along a length 76 of vertical support surface 72. In some such examples, at least a subset of the plurality of vertical sensors 112 may be spaced apart along a width 78 of vertical support surface 72. Such a configuration may permit and/or facilitate detection of physical contact between workpiece 90 and various regions of the vertical support surface.

In some examples, such as when power tool 10 includes handheld joiner 16 of Figs. 7-8, workpiece support 50 may include and/or define first fence region 57, which may define a first support surface 61. In some such examples, sensor array 100 may include a first sensor array 107, which may be operatively coupled to, and/or may be configured to detect physical contact with the workpiece, within first fence region 57. In some such examples, first sensor array 107 includes a plurality of first sensors 109, which may be spaced apart on and/or along first support surface 61. In some such examples, at least a subset of the plurality of first sensors 109 may be spaced apart along a length of first support surface 61. In some such examples, at least a subset of the plurality of first sensors 109 may be spaced apart along a width of first support surface 61. Such a configuration may permit and/or facilitate detection of physical contact between workpiece 90 and various regions of the first support surface.

In some examples, and with continued reference to Figs. 7-8, workpiece support 50 may include and/or define second fence region 71, which may define a second support surface 75. In some such examples, sensor array 100 may include a second sensor array 111, which may be operatively coupled to, and/or may be configured to detect physical contact with the workpiece, within second support surface 75. In some such examples, second sensor array 111 includes a plurality of second sensors 113, which may be spaced apart on and/or along second support surface 75. In some such examples, at least a subset of the plurality of second sensors 113 may be spaced apart along a length of second support surface 75. In some such examples, at least a subset of the plurality of second sensors 113 may be spaced apart along a width of second support surface 75. Such a configuration may permit and/or facilitate detection of physical contact between workpiece 90 and various regions of the second support surface.

In some examples, and with continued reference to Figs. 7-8, workpiece support 50 may include and/or define third fence region 73, which may define a third support surface 77. In some such examples, sensor array 100 may include a third sensor array 115, which may be operatively coupled to, and/or may be configured to detect physical contact with the workpiece, within third support surface 77. In some such examples, third sensor array 115 includes a plurality of third sensors 117, which may be spaced apart on and/or along third support surface 777. In some such examples, at least a subset of the plurality of third sensors 117 may be spaced apart along a length of third support surface 77. In some such examples, at least a subset of the plurality of third sensors 117 may be spaced apart along a width of third support surface 77. Such a configuration may permit and/or facilitate detection of physical contact between workpiece 90 and various regions of the third support surface.

As discussed, vertical support 68 may include sensors 102 in the form of vertical sensors 112. As discussed in more detail herein, sensors 102 may include and/or be electrical, or electrically powered, sensors 102. As such, and in some examples, power tool 10 may include an electrical interconnection 79 between vertical support 68 and horizontal support 54 and/or between vertical support 68 and a remainder of power tool 10. In some examples, electrical interconnection 79 may be configured to permit and/or to facilitate relative motion between horizontal support 54 and vertical support 68 and/or disconnection of vertical support 68 from horizontal support 54. Examples of electrical interconnection 79 include any suitable electric plug and/or wiring harness.

Sensor array 100 may include any suitable structure that may be adapted, configured, designed, and/or constructed to detect physical contact between workpiece support 50 and workpiece 90 and/or to generate sensor output 104 based, at least in part, on the physical contact between the workpiece support and the workpiece. This may include direct detection of the physical contact, detection of a parameter that is indicative of the physical contact, and/or detection of a parameter that correlates to the physical contact. In some examples, sensor array 100 may be configured to directly detect the physical contact, such as via detection of a force and/or a pressure that is applied to the workpiece support and/or to the sensor array by the workpiece. In some examples, sensor array 100 may be configured to indirectly detect the physical contact, such as via detection of proximity of the workpiece to the workpiece support and/or via detection of contact with sensor array 100 that is proximate and/or within the workpiece support.

Regardless of the exact configuration, sensor array 100 is configured to indicate the physical contact, presence of the physical contact, and/or absence of the physical contact via sensor output 104. Examples of sensor array 100 include a plurality of mechanical switches, a plurality of optical sensors, a plurality of capacitive sensors, a plurality of force gauges, a plurality of strain gauges, and/or a plurality of pressure gauges.

The plurality of mechanical switches, when utilized, may detect physical contact between the workpiece and the workpiece support via actuation, or motion, of at least a subset of the plurality of mechanical switches, such as may be caused by contact between the subset of the plurality of mechanical switches and the workpiece. Additionally or alternatively, the plurality of mechanical switches may detect motion, translation, and/or rotation of the workpiece via detection of a change in state of at least one mechanical switch of the plurality of mechanical switches, such as between corresponding open and closed states.

The plurality of optical sensors, when utilized, may detect physical contact between the workpiece and the workpiece support via detection of a distance between the workpiece and the workpiece support and/or between the workpiece and at least a subset of the plurality of optical sensors, that is less than a threshold distance. Additionally or alternatively, the plurality of optical sensors may detect motion, translation, and/or rotation of the workpiece via detection of a change in the distance detected by at least one optical sensor of the plurality of optical sensors. The plurality of capacitive sensors, when utilized, may operate in a similar fashion but may detect a capacitance value that correlates to the distance between the workpiece and the workpiece support.

The plurality of force gauges, when utilized, may detect a physical force applied, to the workpiece support and/or to at least a subset of the plurality of force gauges, by the workpiece. Additionally or alternatively, the plurality of force gauges may detect motion, translation, and/or rotation of the workpiece via change in the force detected by at least one force gauge of the plurality of force gauges. The plurality of strain gauges, when utilized, may operate in a similar fashion but may detect a strain caused by the physical force. The plurality of pressure gauges, when utilized, may operate in a similar manner but may detect a pressure caused by the physical force.

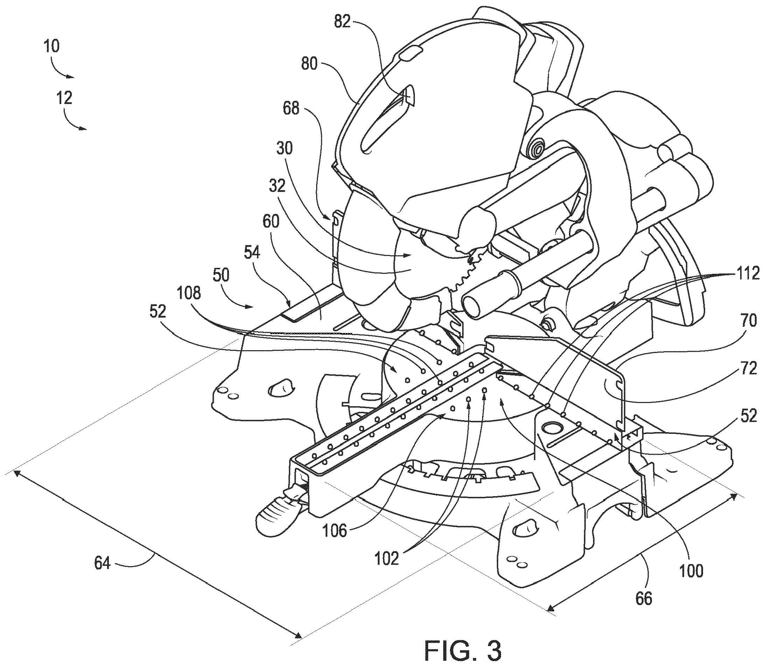

In some examples, and as discussed, sensor array 100 may include the plurality of spaced-apart sensors 102. In some such examples, at least a subset of the plurality of spaced-apart sensors may be operatively coupled to workpiece support 50, may be operatively coupled to support surface 52, may be at least partially embedded within workpiece support 50, and/or may at least partially project from support surface 52. Examples of sensors 102 that are at least partially embedded within workpiece support 50 and/or that are operatively coupled to workpiece support 50 and/or to support surface 52 are illustrated in Figs. 2, 4-6, and 8. Examples of sensors 102, in the form of a plurality of mechanical switches, that at least partially project from support surface 52 are illustrated in Fig. 3. When sensors 102 include the plurality of mechanical switches, each mechanical switch may, or only may, detect motion of the workpiece along an actuation axis of the switch, which may be perpendicular to the corresponding surface with which the switch detects contact. Stated differently, each mechanical switch only may detect motion that is out of a plane defined by the corresponding surface.

When sensor array 100 includes the plurality of spaced-apart sensors 102, each spaced-apart sensor 102 in the plurality of spaced-apart sensors may be configured to generate a corresponding individual sensor output. The corresponding individual sensor output may be indicative of physical contact between the workpiece and a corresponding region of workpiece support 50, such as a region of workpiece support 50 that is proximate and/or that surrounds a corresponding sensor 102. In some such examples, controller 120 may be programmed to control the operation of power tool 10 based, at least in part, on the corresponding individual sensor output of each spaced-apart sensor, on a number of spaced-apart sensors in the plurality of spaced-apart sensors for which the corresponding individual sensor output indicates that physical contact exists between the workpiece and the corresponding region of the workpiece support, on a change in the number of spaced-apart sensors in the plurality of spaced-apart sensors for which the corresponding individual sensor output indicates that physical contact exists between the workpiece and the corresponding region of the workpiece support, and/or on a change in the corresponding individual sensor output for at least one spaced-apart sensor of the plurality of spaced-apart sensors. In a specific example, power tool 10 and/or controller 120 thereof may be adapted, configured, and/or programmed to cease motion of implement 30 responsive to a decrease in the number of spaced-apart sensors in the plurality of spaced-apart sensors for which the corresponding individual sensor output indicates that physical contact exists between the workpiece and the corresponding region of the workpiece support.

In some examples, controller 120 may be programmed to determine the sensed orientation of workpiece 90 relative to workpiece support 50 and based, at least in part, on the corresponding individual sensor output of the plurality of spaced-apart sensors. In some examples, controller 120 may be programmed to generate the orientation output based, at least in part, on the corresponding individual sensor output of the plurality of spaced-apart sensors. In some examples, the controller may be programmed to detect motion of the workpiece relative to the workpiece support and based, at least in part, on a change in the corresponding individual sensor output of at least one spaced-apart sensor of the plurality of spaced-apart sensors.

In some examples, sensor array 100 may be configured to measure a distance between workpiece 90 and workpiece support 50. In some such examples, sensor array 100 may be configured to measure the distance between the workpiece and the workpiece support to a resolution of at least 1 mm, 0.8 mm, 0.6 mm, 0.4 mm, 0.2 mm, or 0.1 mm. In some such examples, sensor array 100 may be configured to measure the distance up to a maximum distance of 10 mm, 8 mm, 6 mm, 4 mm, 2 mm, or 1 mm. In some such examples, the controller may be programmed to determine that the workpiece is in physical contact with the workpiece support when the distance between the workpiece and the workpiece support is less than a threshold distance. Examples of the threshold distance include distances of 1 mm, 0.8 mm, 0.6 mm, 0.4 mm, 0.2 mm, or 0.1 mm. Such a configuration may permit sensor array 100 and/or controller 120 to detect contact between the workpiece and the workpiece support despite the presence of non-planar surfaces on the workpiece.

In some examples, sensor array 100 may be configured to detect the physical contact between the workpiece and the workpiece support at a detection frequency. Examples of the detection frequency include frequencies of at least 100 Hertz (Hz), at least 150 Hz, at least 200 Hz, at least 250 Hz, at least 300 Hz, at least 400 Hz, at least 500 Hz, at least 600 Hz, at least 700 Hz, at least 800 Hz, at least 900 Hz, at least 1,000 Hz, at most 10,000 Hz, at most 8,000 Hz, at most 6,000 Hz, at most 4,000 Hz, at most 2,000 Hz, and/or at most 1,000 Hz. Such a configuration may permit power tools 10 to detect, and respond, to configurations that are indicative of kickback and/or that may cause damage to the workpiece prior to the kickback and/or prior to damage to the workpiece.

Motor 40 may include any suitable structure that may be adapted, configured, designed, and/or constructed to receive electric current 42 and/or to actuate implement holder 20 responsive to receipt of the electric current. As an example, motor 40 may include a motor shaft 44, which may be configured to rotate about a shaft rotational axis 46 responsive to receipt of the electric current by the motor. Examples of motor 40 include an electric motor, an AC electric motor, a DC electric motor, a brushless DC electric motor, a variable-speed motor, and/or a single-speed motor.

Power tools 10 may include other, or additional, components, which may be included in conventional power tools. As an example, and as illustrated in Fig. 1, power tools 10 may include a gripping region 80. Gripping region 80, when present, may be configured to be held and/or gripped by the user of the power tool during operative use of the power tool to perform the operation on the workpiece. As an example, the user may urge implement 30 into contact with workpiece 90 with, via, and/or utilizing gripping region 80.

As another example, and as also illustrated in dashed lines in Fig. 1, power tools 10 may include a switch 82. Switch 82, when present, may be configured to be selectively actuated by the user, such as to selectively apply electric current 42 to at least one other component of the power tool, such as to motor 40 and/or to controller 120. In a specific example, actuation of switch 82 may cause power tool 10 to move implement 30 and/or may be at least one condition that produces motion of implement 30.

As yet another example, and as also illustrated in dashed lines in Fig. 1, power tools 10 may include a power source 84. Power source 84, when present, may be adapted, configured, designed, and/or constructed to power, or to electrically power, at least one other component of power tools 10, such as motor 40 and/or controller 120. Examples of power source 84 include any suitable AC power source and/or DC power source, such as a power cord 86 and/or a battery 88.

Fig. 9 is a flowchart depicting examples of methods 200 of operating power tools, according to the present disclosure, such as power tools 10 of Figs. 1-8. Methods 200 include positioning a workpiece at 210 and may include performing an operation on the workpiece at 220. Methods 200 also include detecting a position of the workpiece at 230 and controlling the operation of the power tool at 240.

Positioning the workpiece at 210 may include positioning the workpiece on a support surface of a workpiece support of the power tool. This may include positioning the workpiece such that the workpiece is in contact, is in physical contact, and/or is in direct physical contact with the support surface. Additionally or alternatively, the positioning at 210 may include positioning the workpiece such that the workpiece applies a force, or a contact force, to at least a region of the support surface. Examples of the workpiece support are disclosed herein with reference to workpiece support 50. Examples of the support surface are disclosed herein with reference to support surface 52.

As discussed in more detail herein, the power tool includes a sensor array, which may be configured to detect physical contact between the workpiece support and the workpiece. With this in mind, the positioning at 210 additionally or alternatively may include positioning the workpiece proximate and/or in contact with at least a region of the sensor array. Additionally or alternatively, the positioning at 210 may include applying at least a fraction of the force to at least a region of the sensor array. Examples of the sensor array are disclosed herein with reference to sensor array 100.

The positioning at 210 may be executed with any suitable timing and/or sequence during methods 200. As examples, the positioning at 210 may be executed prior to the performing at 220, prior to the detecting at 230, and/or prior to the controlling at 240. As another example, the detecting at 230 may be executed at least partially responsive to the positioning at 210. In general, the positioning at 210 includes retaining the workpiece on the support surface during the performing at 220, the detecting at 230, and the controlling at 240.

Performing the operation on the workpiece at 220 may include performing any suitable operation on the workpiece and with the power tool. Examples of the power tool are disclosed herein. Examples of the operation also are disclosed herein.

The performing at 220 may be executed with any suitable timing and/or sequence during methods 200. As examples, the performing at 220 may be executed subsequent to the positioning at 210 and/or prior to, at least partially concurrently with, or completely concurrently with the detecting at 230 and/or the controlling at 240.

Detecting the position of the workpiece at 230 may include detecting the position of the workpiece on the support surface. The detecting at 230 may be performed with, via, and/or utilizing the sensor array of the power tool and may include detecting physical contact between the workpiece and the support surface. Controlling the operation of the power tool at 240 may include controlling the operation of the power tool based, at least in part, on the detecting at 230.

The detecting at 230 may be performed with any suitable timing and/or sequence during methods 200. As examples, the detecting at 230 may be performed subsequent to the positioning at 210 and/or at least partially, or completely, concurrently with the performing at 220 and/or the controlling at 240. Similarly, the controlling at 240 may be performed with any suitable timing and/or sequence during methods 200. As examples, the controlling at 240 may be performed subsequent to the positioning at 210 and/or at least partially, or completely, concurrently with the performing at 220 and/or the detecting at 230.

In some examples, the detecting at 230 may include detecting an initial sensed orientation of the workpiece on the workpiece support. In some such examples, the detecting at 230 also may include subsequently detecting a currently sensed orientation of the workpiece relative to the workpiece support. In such examples, the controlling at 240 may include controlling the operation of the power tool based, at least in part, on a comparison between the initial sensed orientation and the currently sensed orientation.

In some examples, the detecting at 230 additionally may include storing the initial sensed orientation. This may include storing the initial sensed orientation in an orientation memory location of the power tool, examples of which are disclosed herein with reference to orientation memory location 124. In some examples, the storing may be responsive to supply of an electric current to a motor of the power tool. Stated differently, the storing may occur, or may automatically occur, when the user initiates supply of the electric current to the motor, such as to cut the workpiece. In some examples, the storing may be responsive to actuation of a memory location actuator of the power tool, with this actuation being performed by the user of the power tool. Stated differently, the user may actuate the memory location actuator to indicate, to the power tool, that a currently sensed orientation of the workpiece relative to the workpiece support corresponds to the initial sensed orientation. The power tool then may store the currently sensed orientation of the workpiece as the initial sensed orientation and/or in the orientation memory location, such as to permit and/or to facilitate later retrieval and/or utilization of the initial sensed orientation.

In some examples, the detecting at 230 may include detecting a sensed, or the currently sensed, orientation of the workpiece relative to the workpiece support. Stated differently, the detecting at 230 may include detecting the orientation of the workpiece relative to the workpiece support at a given point in time, with this orientation at the given point in time corresponding to the sensed orientation. In some such examples, the detecting at 230 also may include comparing the sensed orientation to a target, or a desired, orientation of the workpiece relative to the workpiece support. Examples of the target orientation of the workpiece are disclosed herein with reference to target orientation 94.

In some such examples, the controlling at 240 may include controlling the operation of the power tool based, at least in part, on the comparison between the sensed orientation of the workpiece and the target orientation of the workpiece. As an example, the controlling at 240 may include preventing supply of the electric current to the motor of the power tool responsive to the sensed orientation of the workpiece differing from the target orientation of the workpiece. As another example, the controlling at 240 may include permitting supply of the electric current to the motor of the power tool responsive to the sensed orientation of the workpiece corresponding to the target orientation of the workpiece. The preventing supply of electric current and/or the permitting supply of electric current may be performed utilizing an interlock structure of the power tool, examples of which are disclosed herein with reference to interlock structure 150.

As another example, the controlling at 240 may include preventing motion of an implement of the power tool responsive to the sensed orientation of the workpiece differing from the target orientation of the workpiece. As another example, the controlling at 240 may include permitting motion of the implement of the power tool responsive to the sensed orientation of the workpiece corresponding to the target orientation of the workpiece.

As yet another example, the controlling at 240 may include notifying the user of the power tool that the sensed orientation of the workpiece differs from the target orientation of the workpiece. As another example, the controlling at 240 may include notifying the user of the power tool that the sensed orientation of the workpiece corresponds to the target orientation of the workpiece. The notifying may be performed utilizing a notification structure of the power tool, examples of which are disclosed herein with reference to notification structure 140.

In some examples, and when methods 200 include the performing at 220, the detecting at 230 may include detecting motion of the workpiece relative to the workpiece support and/or during the performing at 230. This may include detecting a change in the orientation of the workpiece, such as via detecting a change in orientation from, or via comparison with, the initial sensed orientation. Examples of the motion include translation of the workpiece relative to the workpiece support and/or rotation of the workpiece relative to the workpiece support.

In such examples, the controlling at 240 may include controlling based, at least in part, on the motion. As an example, the controlling at 240 may include preventing supply of the electric current to the motor of the power tool responsive to the motion of the workpiece relative to the workpiece support. As another example, the controlling at 240 may include selectively stopping motion of the implement responsive to the motion of the workpiece relative to the workpiece support. The preventing supply of electric current and/or the selectively stopping may be performed utilizing the interlock structure. As yet another example, the controlling at 240 may include notifying the user of the power tool of the motion of the workpiece relative to the workpiece support. The notifying may be performed utilizing the notification structure.

In the present disclosure, several of the illustrative, non-exclusive examples have been discussed and/or presented in the context of flow diagrams, or flow charts, in which the methods are shown and described as a series of blocks, or steps. Unless specifically set forth in the accompanying description, it is within the scope of the present disclosure that the order of the blocks may vary from the illustrated order in the flow diagram, including with two or more of the blocks (or steps) occurring in a different order and/or concurrently.

As used herein, the term "and/or" placed between a first entity and a second entity means one of (1) the first entity, (2) the second entity, and (3) the first entity and the second entity. Multiple entities listed with "and/or" should be construed in the same manner, i.e., "one or more" of the entities so conjoined. Other entities may optionally be present other than the entities specifically identified by the "and/or" clause, whether related or unrelated to those entities specifically identified. Thus, as a non-limiting example, a reference to "A and/or B," when used in conjunction with open-ended language such as "comprising" may refer, in one embodiment, to A only (optionally including entities other than B); in another embodiment, to B only (optionally including entities other than A); in yet another embodiment, to both A and B (optionally including other entities). These entities may refer to elements, actions, structures, steps, operations, values, and the like.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

In the event that any patents, patent applications, or other references are incorporated by reference herein and (1) define a term in a manner that is inconsistent with and/or (2) are otherwise inconsistent with, either the non-incorporated portion of the present disclosure or any of the other incorporated references, the non-incorporated portion of the present disclosure shall control, and the term or incorporated disclosure therein shall only control with respect to the reference in which the term is defined and/or the incorporated disclosure was present originally.

As used herein the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of' performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

As used herein, "at least substantially," when modifying a degree or relationship, may include not only the recited "substantial" degree or relationship, but also the full extent of the recited degree or relationship. A substantial amount of a recited degree or relationship may include at least 75% of the recited degree or relationship. For example, an object that is at least substantially formed from a material includes objects for which at least 75% of the objects are formed from the material and also includes objects that are completely formed from the material. As another example, a first length that is at least substantially as long as a second length includes first lengths that are within 75% of the second length and also includes first lengths that are as long as the second length.

Illustrative, non-exclusive examples of power tools and methods according to the present disclosure are presented in the following enumerated paragraphs. It is within the scope of the present disclosure that an individual step of a method recited herein, including in the following enumerated paragraphs, may additionally or alternatively be referred to as a "step for" performing the recited action.

A1. A power tool, comprising:
an implement holder configured to hold an implement, which is configured to perform an operation on a workpiece;
a motor configured to receive an electric current and to actuate the implement holder to move the implement responsive to receipt of the electric current;
a workpiece support including a support surface configured to support the workpiece, wherein the workpiece support is configured to maintain a fixed, or at least substantially fixed, orientation relative to the workpiece while the implement performs the operation on the workpiece;
a sensor array configured to detect physical contact between the workpiece support and the workpiece and to generate a sensor output that is based, at least in part, on the physical contact between the workpiece support and the workpiece; and
a controller programmed to receive the sensor output from the sensor array and to control the operation of the power tool based, at least in part, on the sensor output.

A2. The power tool of paragraph A1, wherein the controller includes an orientation memory location programmed to store an initial sensor output that is indicative of an initial sensed orientation of the workpiece relative to the workpiece support.

A3. The power tool of paragraph A2, wherein the power tool further includes a memory location actuator configured be selectively actuated, optionally by a user of the power tool, and further wherein the controller is programmed to store the initial sensor output responsive to actuation of the memory location actuator.

A4. The power tool of any of paragraphs A2-A3, wherein the controller is programmed to store the initial sensor output upon supply of the electric current to the motor.

A5. The power tool of any of paragraphs A2-A4, wherein the controller is programmed to control the operation of the power tool based, at least in part, on a comparison of the sensor output to the initial sensor output.

A6. The power tool of any of paragraphs A1-A5, wherein the controller is programmed to perform any suitable step of any of the methods of any of paragraphs B1-B16.

A7. The power tool of any of paragraphs A1-A6, wherein the controller is programmed to determine a sensed orientation of the workpiece, relative to the workpiece support, based, at least in part, on the sensor output.

A8. The power tool of paragraph A7, wherein the controller is programmed to generate an orientation output based, at least in part, on the sensed orientation of the workpiece relative to the workpiece support.

A9. The power tool of paragraph A8, wherein the controller is programmed to compare the sensed orientation of the workpiece relative to the workpiece support to a target orientation of the workpiece relative to the workpiece support and to generate the orientation output based, at least in part, on the comparison between the sensed orientation of the workpiece and the target orientation of the workpiece.

A10. The power tool of paragraph A9, wherein the target orientation of the workpiece includes at least one of:
(i) direct physical contact between the workpiece and at least a threshold horizontal region of the workpiece support;
(ii) face-to-face contact between the workpiece and at least the threshold horizontal region of the workpiece support;
(iii) at least a threshold horizontal force magnitude applied, by the workpiece, to the threshold horizontal region of the workpiece support;
(iv) direct physical contact between the workpiece and at least a threshold vertical region of the workpiece support;
(v) face-to-face contact between the workpiece and at least the threshold vertical region of the workpiece support; and
(vi) at least a threshold vertical force magnitude applied, by the workpiece, to the threshold vertical region of the workpiece support.

A11. The power tool of any of paragraphs A8-A10, wherein the power tool further includes an orientation notification structure configured to receive the orientation output from the controller.

A12. The power tool of paragraph A11, wherein the orientation notification structure is configured to at least one of:
(i) notify a/the user of the power tool when the orientation output indicates that the sensed orientation of the workpiece differs from a/the target orientation of the workpiece; and
(ii) notify the user of the power tool when the orientation output indicates that the sensed orientation of the workpiece corresponds to the target orientation of the workpiece.

A13. The power tool of any of paragraphs A8-A12, wherein the power tool further includes an orientation interlock structure configured to receive the orientation output from the controller.

A14. The power tool of paragraph A13, wherein the orientation interlock structure is configured to at least one of:
(i) selectively prevent flow of the electric current to the motor when the orientation output indicates that the sensed orientation of the workpiece differs from a/the target orientation of the workpiece; and
(ii) selectively permit the flow of electric current to the motor when the orientation output indicates that the sensed orientation of the workpiece is consistent with the target orientation of the workpiece.

A15. The power tool of any of paragraphs A1-A14, wherein the controller is programmed to detect motion of the workpiece, relative to the workpiece support, when the implement performs the operation on the workpiece, based at least in part on the sensor output.

A16. The power tool of paragraph A15, wherein the motion of the workpiece relative to the workpiece support includes at least one of:
(i) translation of the workpiece relative to the workpiece support; and
(ii) rotation of the workpiece relative to the workpiece support.

A17. The power tool of any of paragraphs A15-A16, wherein the controller is programmed to detect the motion of the workpiece via a change in the sensor output.

A18. The power tool of any of paragraphs A15-A17, wherein the controller is programmed to detect the motion of the workpiece via a change in an orientation of the workpiece relative to the workpiece support.

A19. The power tool of any of paragraphs A15-A18, wherein the controller is programmed to generate a motion output based, at least in part, on motion of the workpiece relative to the workpiece support.

A20. The power tool of paragraph A19, wherein the controller is programmed to generate the motion output when the motion of the workpiece has a threshold motion magnitude, optionally wherein the threshold motion magnitude is at least one of at least 0.01 millimeters (mm), at least 0.05 mm, at least 0.1 mm, at least 0.2 mm, at least 0.3 mm, at least 0.4 mm, or at least 0.5 mm.

A21. The power tool of any of paragraphs A19-A20, wherein the power tool further includes a motion notification structure configured to receive the motion output from the controller.

A22. The power tool of paragraph A21, wherein the motion notification structure is configured to notify a/the user about motion of the workpiece relative to the workpiece support.

A23. The power tool of any of paragraphs A19-A21, wherein the power tool further includes a motion interlock structure configured to receive the motion output from the controller.

A24. The power tool of paragraph A23, wherein the motion interlock structure is configured to at least one of:
(i) selectively prevent flow of the electric current to the motor responsive to receipt of the motion output from the controller; and
(ii) selectively stop motion of the implement responsive to receipt of the motion output from the controller.

A25. The power tool of any of paragraphs A1-A24, wherein the workpiece support includes a horizontal support, or a first fence region, that defines a horizontal support surface, or a first support surface, and further wherein the sensor array includes a horizontal sensor array, or a first sensor array, that is operatively coupled to the horizontal support, or to the first fence region.

A26. The power tool of paragraph A25, wherein the horizontal sensor array, or the first sensor array, includes a plurality of horizontal sensors, or a plurality of first sensors, spaced apart along the horizontal support surface, or along the first support surface.

A27. The power tool of paragraph A26, wherein at least a subset of the plurality of horizontal sensors, or first sensors, is spaced apart along a length of the horizontal support surface, or the first support surface.

A28. The power tool of any of paragraphs A26-A27, wherein at least a subset of the plurality of horizontal sensors, or first sensors, is spaced apart along a width of the horizontal support surface, or the first support surface.

A29. The power tool of any of paragraphs A1-A28, wherein the workpiece support includes a vertical support, or a second fence region, that includes a vertical support surface, or a second support surface, and further wherein the sensor array includes a vertical sensor array, or a second sensor array, that is operatively coupled to the vertical support, or the second fence region.

A29.1. The power tool of paragraph A29, wherein at least one of:
(i) the second fence region extends perpendicular to a/the first fence region; and
(ii) the second fence region is configured to pivot, relative to the first fence region, about a pivot axis to selectively vary an angle between a/the first support surface and the second support surface.

A30. The power tool of paragraph A29 or paragraph A29.1, wherein the vertical sensor array, or the second sensor array, includes a plurality of vertical sensors, or a plurality of second sensors, spaced apart along the vertical support surface, or the second support surface.

A31. The power tool of paragraph A30, wherein at least a subset of the plurality of vertical sensors, or second sensors, is spaced apart along a length of the vertical support surface, or the second support surface.

A32. The power tool of any of paragraphs A30-A31, wherein at least a subset of the plurality of vertical sensors, or second sensors, is spaced apart along a width of the vertical support surface, or the second support surface.

A33. The power tool of any of paragraphs A1-A32, wherein the sensor array includes at least one of:
(i) a plurality of mechanical switches;
(ii) a plurality of optical sensors;
(iii) a plurality of capacitive sensors;
(iv) a plurality of force gauges;
(v) a plurality of strain gauges; and
(vi) a plurality of pressure gauges.

A34. The power tool of paragraph A33, wherein the sensor array includes a plurality of spaced-apart sensors.

A35. The power tool of paragraph A34, wherein at least a subset of the plurality of spaced-apart sensors at least one of:
(i) is operatively coupled to the workpiece support;
(ii) is operatively coupled to the support surface;
(iii) is at least partially embedded within the workpiece support; and
(iv) at least partially projects from the support surface.

A36. The power tool of any of paragraphs A34-A35, wherein each spaced-apart sensor in the plurality of spaced-apart sensors is configured to generate a corresponding individual sensor output that is indicative of physical contact between the workpiece and a corresponding region of the workpiece support.

A37. The power tool of paragraph A36, wherein the controller is programmed to control the operation of the power tool based, at least in part, on at least one of:
(i) the corresponding individual sensor output of each spaced-apart sensor;
(ii) a number of spaced-apart sensors in the plurality of spaced-apart sensors for which the corresponding individual sensor output indicates that physical contact exists between the workpiece and the corresponding region of the workpiece support;
(iii) a change in the number of spaced-apart sensors in the plurality of spaced-apart sensors for which the corresponding individual sensor output indicates that physical contact exists between the workpiece and the corresponding region of the workpiece support; and
(iv) a change in the corresponding individual sensor output for at least one spaced-apart sensor of the plurality of spaced-apart sensors.

A37.1. The power tool of any of paragraphs A36-A37, wherein the power tool is configured to cease motion of the implement responsive to a decrease in a/the number of spaced-apart sensors in the plurality of spaced-apart sensors for which the corresponding individual sensor output indicates that physical contact exists between the workpiece and the corresponding region of the workpiece support.

A38. The power tool of any of paragraphs A36-A37.1, wherein the controller is programmed to determine a/the sensed orientation of the workpiece, relative to the workpiece support, based, at least in part, on the corresponding individual sensor output of the plurality of spaced-apart sensors.

A39. The power tool of any of paragraphs A36-A38, wherein the controller is programmed to generate an/the orientation output based, at least in part, on the corresponding individual sensor output of the plurality of spaced-apart sensors.

A40. The power tool of any of paragraphs A36-A39, wherein the controller is programmed to detect motion of the workpiece, relative to the workpiece support, based, at least in part, on a change in the corresponding individual sensor output of at least one spaced-apart sensor of the plurality of spaced-apart sensors.

A41. The power tool of any of paragraphs A1-A40, wherein the sensor array is configured to measure a distance between the workpiece and the workpiece support.

A42. The power tool of any of paragraphs A1-A41, wherein the sensor array is configured to detect the physical contact between the workpiece support and the workpiece at a detection frequency of at least one of:
(i) at least 100 Hertz (Hz), at least 150 Hz, at least 200 Hz, at least 250 Hz, at least 300 Hz, at least 400 Hz, at least 500 Hz, at least 600 Hz, at least 700 Hz, at least 800 Hz, at least 900 Hz, or at least 1,000 Hz; and
(ii) at most 10,000 Hz, at most 8,000 Hz, at most 6,000 Hz, at most 4,000 Hz, at most 2,000 Hz, or at most 1,000 Hz.

A43. The power tool of any of paragraphs A1-A42, wherein the power tool is or includes a miter saw, wherein the implement holder includes an arbor, and further wherein the implement includes a circular saw blade.

A44. The power tool of paragraph A43, wherein the workpiece support includes a/the vertical support and a/the horizontal support.

A45. The power tool of any of paragraphs A43-A44, wherein the workpiece support is configured to retain the workpiece stationary, or at least substantially stationary, as the miter saw cuts the workpiece utilizing the circular saw blade.

A46. The power tool of any of paragraphs A1-A42, wherein the power tool is or includes a sliding table saw, wherein the implement holder includes an arbor, and further wherein the implement includes a circular saw blade.

A47. The power tool of paragraph A46, wherein the workpiece support is or includes a horizontal sliding table that is configured to translate, relative to the circular saw blade, as the table saw cuts the workpiece utilizing the circular saw blade.

A48. The power tool of paragraph A47, wherein the workpiece support further includes a vertical fence configured to operatively interlock with the horizontal sliding table and to translate, relative to the circular saw blade, as the table saw cuts the workpiece utilizing the circular saw blade.

A49. The power tool of any of paragraphs A1-A42, wherein the power tool is or includes at least one of a joiner and a handheld joiner, and further wherein the implement includes a joiner cutter.

A50. The power tool of paragraph A49, wherein the workpiece support includes a first fence region and a second fence region, which extends perpendicular, or at least substantially perpendicular, to the first fence region.

B1. A method of operating a power tool, the method comprising:
positioning a workpiece on a support surface of a workpiece support of the power tool;
detecting, with a sensor array of the power tool, a position of the workpiece on the support surface by detecting physical contact between the workpiece and the support surface; and
controlling the operation of the power tool based, at least in part, on the detecting.

B2. The method of paragraph B1, wherein the detecting includes detecting an initial sensed orientation of the workpiece on the support surface, wherein the controlling is based, at least in part, on a comparison between the initial sensed orientation of the workpiece relative to the workpiece support and a currently sensed orientation of the workpiece relative to the workpiece support.

B3. The method of paragraph B2, wherein the detecting the initial sensed orientation includes storing the initial sensed orientation in an orientation memory location of the power tool.

B4. The method of paragraph B3, wherein the storing is responsive to actuation, by a user of the power tool, of a memory location actuator of the power tool.

B5. The method of any of paragraphs B3-B4, wherein the storing is responsive to supply of an electric current to a motor of the power tool.

B6. The method of any of paragraphs B1-B5, wherein the detecting includes detecting a sensed orientation of the workpiece relative to the workpiece support.

B7. The method of paragraph B6, wherein the detecting further includes comparing the sensed orientation of the workpiece relative to the workpiece support to a target orientation of the workpiece relative to the workpiece support.

B8. The method of paragraph B7, wherein the controlling includes controlling the operation of the power tool based, at least in part, on a comparison between the sensed orientation of the workpiece and the target orientation of the workpiece.

B9. The method of any of paragraphs B7-B8, wherein the controlling includes at least one of:
(i) preventing supply of a/the electric current to a/the motor of the power tool responsive to the sensed orientation of the workpiece differing from the target orientation of the workpiece;
(ii) permitting supply of the electric current to the motor of the power tool responsive to the sensed orientation of the workpiece corresponding to the target orientation of the workpiece;
iii) preventing motion of an implement of the power tool responsive to the sensed orientation of the workpiece differing from the target orientation of the workpiece; and
(iv) permitting motion of the implement of the power tool responsive to the sensed orientation of the workpiece corresponding to the target orientation of the workpiece.

B10. The method of any of paragraphs B7-B9, wherein the controlling includes at least one of:
(i) notifying a user of the power tool that the sensed orientation of the workpiece differs from the target orientation of the workpiece; and
(ii) notifying the user of the power tool that the sensed orientation of the workpiece corresponds to the target orientation of the workpiece.

B11. The method of any of paragraphs B1-B10, wherein the method further includes performing an operation on the workpiece utilizing an/the implement of the power tool, and further wherein the detecting includes detecting motion of the workpiece, relative to the workpiece support, during the performing.

B12. The method of paragraph B11, wherein the detecting motion of the workpiece includes detecting a change in orientation of the workpiece, relative to the workpiece support, from an/the initial sensed orientation.

B13. The method of any of paragraphs B11-B12, wherein the controlling includes at least one of:
(i) preventing supply of a/the electric current to a/the motor of the power tool responsive to the motion of the workpiece relative to the workpiece support; and
(ii) selectively stopping motion of the implement responsive to the motion of the workpiece relative to the workpiece support.

B14. The method of any of paragraphs B11-B13, wherein the controlling includes notifying a/the user of the power tool of the motion of the workpiece relative to the workpiece support.

B15. The method of any of paragraphs B11-B14, wherein the detecting motion of the workpiece includes detecting at least one of:
(i) translation of the workpiece relative to the workpiece support; and
(ii) rotation of the workpiece relative to the workpiece support.

B16. The method of any of paragraphs B1-B15, wherein the power tool includes any suitable structure of any of the power tools of any of paragraphs A1-A50.

### Industrial Applicability

The power tools and methods disclosed herein are applicable to the electric power tool industry.

It is believed that the disclosure set forth above encompasses multiple distinct inventions with independent utility. While each of these inventions has been disclosed in its preferred form, the specific embodiments thereof as disclosed and illustrated herein are not to be considered in a limiting sense as numerous variations are possible. The subject matter of the inventions includes all novel and non-obvious combinations and subcombinations of the various elements, features, functions and/or properties disclosed herein. Similarly, where the claims recite "a" or "a first" element or the equivalent thereof, such claims should be understood to include incorporation of one or more such elements, neither requiring nor excluding two or more such elements.

It is believed that the following claims particularly point out certain combinations and subcombinations that are directed to one of the disclosed inventions and are novel and non-obvious. Inventions embodied in other combinations and subcombinations of features, functions, elements and/or properties may be claimed through amendment of the present claims or presentation of new claims in this or a related application. Such amended or new claims, whether they are directed to a different invention or directed to the same invention, whether different, broader, narrower, or equal in scope to the original claims, are also regarded as included within the subject matter of the inventions of the present disclosure.

## Claims

1. A power tool, comprising:
an implement holder configured to hold an implement, which is configured to perform an operation on a workpiece;
a motor configured to receive an electric current and to actuate the implement holder to move the implement responsive to receipt of the electric current;
a workpiece support including a support surface configured to support the workpiece, wherein the workpiece support is configured to maintain an at least substantially fixed orientation relative to the workpiece while the implement performs the operation on the workpiece;
a sensor array configured to detect physical contact between the workpiece support and the workpiece and to generate a sensor output that is based, at least in part, on the physical contact between the workpiece support and the workpiece; and
a controller programmed to receive the sensor output from the sensor array and to control the operation of the power tool based, at least in part, on the sensor output.

2. The power tool of claim 1, wherein the controller is programmed to determine a sensed orientation of the workpiece, relative to the workpiece support, based, at least in part, on the sensor output, wherein the controller is programmed to generate an orientation output based, at least in part, on the sensed orientation of the workpiece relative to the workpiece support, wherein the controller is programmed to compare the sensed orientation of the workpiece relative to the workpiece support to a target orientation of the workpiece relative to the workpiece support and to generate the orientation output based, at least in part, on the comparison between the sensed orientation of the workpiece and the target orientation of the workpiece, wherein the target orientation of the workpiece includes at least one of:
(i) direct physical contact between the workpiece and at least a threshold horizontal region of the workpiece support;
(ii) face-to-face contact between the workpiece and at least the threshold horizontal region of the workpiece support;
(iii) at least a threshold horizontal force magnitude applied, by the workpiece, to the threshold horizontal region of the workpiece support;
(iv) direct physical contact between the workpiece and at least a threshold vertical region of the workpiece support;
(v) face-to-face contact between the workpiece and at least the threshold vertical region of the workpiece support; and
(vi) at least a threshold vertical force magnitude applied, by the workpiece, to the threshold vertical region of the workpiece support.

3. The power tool of claim 2, wherein the power tool further includes an orientation notification structure configured to receive the orientation output from the controller, wherein the orientation notification structure is configured to at least one of:
(i) notify a user of the power tool when the orientation output indicates that the sensed orientation of the workpiece differs from the target orientation of the workpiece; and
(ii) notify the user of the power tool when the orientation output indicates that the sensed orientation of the workpiece corresponds to the target orientation of the workpiece; and
wherein the power tool further includes an orientation interlock structure configured to receive the orientation output from the controller, wherein the orientation interlock structure is configured to at least one of:
(i) selectively prevent flow of the electric current to the motor when the orientation output indicates that the sensed orientation of the workpiece differs from the target orientation of the workpiece; and
(ii) selectively permit the flow of electric current to the motor when the orientation output indicates that the sensed orientation of the workpiece is consistent with the target orientation of the workpiece.

4. The power tool of any of claims 1-2, wherein the controller is programmed to detect motion of the workpiece, relative to the workpiece support when the implement performs the operation on the workpiece, based at least in part on the sensor output, wherein the controller is programmed to at least one of:
(i) detect the motion of the workpiece via a change in the sensor output; and
(ii) detect the motion of the workpiece via a change in an orientation of the workpiece relative to the workpiece support.

5. The power tool of claim 4, wherein the controller is programmed to generate a motion output based, at least in part, on motion of the workpiece relative to the workpiece support, wherein the power tool further includes a motion interlock structure configured to receive the motion output from the controller, wherein the motion interlock structure is configured to at least one of:
(i) selectively prevent flow of the electric current to the motor responsive to receipt of the motion output from the controller; and
(ii) selectively stop motion of the implement responsive to receipt of the motion output from the controller.

6. The power tool of any of claims 1-5,
wherein the workpiece support includes a horizontal support that defines a horizontal support surface, wherein the sensor array includes a horizontal sensor array that is operatively coupled to the horizontal support, and further wherein the horizontal sensor array includes a plurality of horizontal sensors spaced apart along the horizontal support surface, and/or
wherein the workpiece support includes a vertical support that includes a vertical support surface, wherein the sensor array includes a vertical sensor array that is operatively coupled to the vertical support, and further wherein the vertical sensor array includes a plurality of vertical sensors spaced apart along the vertical support surface, and/or
wherein the sensor array includes at least one of:
(i) a plurality of mechanical switches;
(ii) a plurality of optical sensors;
(iii) a plurality of capacitive sensors;
(iv) a plurality of force gauges;
(v) a plurality of strain gauges; and
(vi) a plurality of pressure gauges.

7. The power tool of any of claims 1-6, wherein the sensor array includes a plurality of spaced-apart sensors, wherein at least a subset of the plurality of spaced-apart sensors at least one of:
(i) is operatively coupled to the workpiece support;
(ii) is operatively coupled to the support surface;
(iii) is at least partially embedded within the workpiece support; and
(iv) at least partially projects from the support surface.

8. The power tool of claim 7, wherein each spaced-apart sensor in the plurality of spaced-apart sensors is configured to generate a corresponding individual sensor output that is indicative of physical contact between the workpiece and a corresponding region of the workpiece support, wherein the controller is programmed to control the operation of the power tool based, at least in part, on at least one of:
(i) the corresponding individual sensor output of each spaced-apart sensor;
(ii) a number of spaced-apart sensors in the plurality of spaced-apart sensors for which the corresponding individual sensor output indicates that physical contact exists between the workpiece and the corresponding region of the workpiece support;
(iii) a change in the number of spaced-apart sensors in the plurality of spaced-apart sensors for which the corresponding individual sensor output indicates that physical contact exists between the workpiece and the corresponding region of the workpiece support; and
(iv) a change in the corresponding individual sensor output for at least one spaced-apart sensor of the plurality of spaced-apart sensors.

9. The power tool of any of claims 1-8, wherein the power tool is a miter saw, wherein the implement holder includes an arbor, and further wherein the implement includes a circular saw blade, or wherein the power tool is a sliding table saw, wherein the implement holder includes an arbor, and further wherein the implement includes a circular saw blade, or wherein the power tool is at least one of a joiner and a handheld joiner, and further wherein the implement includes a joiner cutter.

10. The power tool of any of claims 1-9, wherein the controller includes an orientation memory location programmed to store an initial sensor output that is indicative of an initial sensed orientation of the workpiece relative to the workpiece support,
wherein the power tool further includes a memory location actuator configured be selectively actuated, and further wherein the controller is programmed to store the initial sensor output responsive to actuation of the memory location actuator, and/or
wherein the controller is programmed to store the initial sensor output upon supply of the electric current to the motor.

11. A method of operating a power tool, the method comprising:
positioning a workpiece on a support surface of a workpiece support of the power tool;
detecting, with a sensor array of the power tool, a position of the workpiece on the support surface by detecting physical contact between the workpiece and the support surface; and
controlling the operation of the power tool based, at least in part, on the detecting.

12. The method of claim 11,
wherein the detecting includes detecting an initial sensed orientation of the workpiece on the support surface, wherein the controlling is based, at least in part, on a comparison between the initial sensed orientation of the workpiece relative to the workpiece support and a currently sensed orientation of the workpiece relative to the workpiece support, and/or
wherein the detecting includes detecting a sensed orientation of the workpiece relative to the workpiece support, wherein the detecting further includes comparing the sensed orientation of the workpiece relative to the workpiece support to a target orientation of the workpiece relative to the workpiece support, and further wherein the controlling includes controlling the operation of the power tool based, at least in part, on a comparison between the sensed orientation of the workpiece and the target orientation of the workpiece.

13. The method of any of claims 12, wherein the controlling includes at least one of:
(i) preventing supply of an electric current to a motor of the power tool responsive to the sensed orientation of the workpiece differing from the target orientation of the workpiece;
(ii) permitting supply of the electric current to the motor of the power tool responsive to the sensed orientation of the workpiece corresponding to the target orientation of the workpiece
iii) preventing motion of an implement of the power tool responsive to the sensed orientation of the workpiece differing from the target orientation of the workpiece; and
(iv) permitting motion of the implement of the power tool responsive to the sensed orientation of the workpiece corresponding to the target orientation of the workpiece.

14. The method of any of claims 12-13, wherein the controlling includes at least one of:
(i) notifying a user of the power tool that the sensed orientation of the workpiece differs from the target orientation of the workpiece; and
(ii) notifying the user of the power tool that the sensed orientation of the workpiece corresponds to the target orientation of the workpiece.

15. The method of claim 11, wherein the method further includes performing an operation on the workpiece utilizing an implement of the power tool, and further wherein the detecting includes detecting motion of the workpiece, relative to the workpiece support, during the performing, wherein the detecting motion of the workpiece includes detecting a change in orientation of the workpiece, relative to the workpiece support, from an initial sensed orientation.
